# EUROPEAN PATENT APPLICATION

(11) **EP 1 389 870 A2**
(43) Date of publication of application: **18.02.2004**
(21) Application number: 03018236.4
(22) Date of filing: 11.08.2003
(51) Int. Cl.: H04N 1/60

(54) **Image proofing apparatus under consideration of spot colors**

(30) Priority: 13.08.2002 JP 2002235552; 13.08.2002 JP 2002235554
(71) Applicant: Fuji Photo Film Co. Ltd., Kanagawa 250-0193 (JP)
(72) Inventor: Teraue, Eiji, Ashigarakami-gun, Kanagawa 258-8538 (JP)
(74) Representative: Klunker . Schmitt-Nilson . Hirsch

(57) **Abstract**

An image processing apparatus creates additional image data representative of an additional image describing the reproduction contents for spot colors of a printed image in an output device for outputting a proof image and outputs proof image data representative of the proof image and the additional image data. Confirmation of the additional image outputted from the output device makes it possible to discriminate the reproduction method of the spot colors of the proof image.

## Description

### BACKGROUND OF THE INVENTION

### Field of the Invention

The present invention relates to an image processing apparatus for creating a proof image to be used in a color proof prior to printing, when an image including a spot color is printed by a color printing machine, and an image processing program storage medium storing an image processing program which causes a computer to operate as such an image processing apparatus when the image processing program is executed in the computer.

### Description of the Related Art

Hitherto, in printing by a color printing machine, process inks of four colors of C (cyan), M (magenta), Y (yellow), and K (black) are used to represent all colors by means of superposition of those process inks. However, regarding, for instance, colors hard to express by a combination of the process inks and colors frequently used, it happens that there is used an ink, which is specifically adjusted to represent the color as it is as the "spot color". This ink for the spot color will be referred to as a spot color ink hereinafter. A color image printed using the spot color ink is formed in such a manner that a spot color image printed with the spot color ink is superimposed as well as a process color image printed with the process inks of CMYK four colors.

By the way, a printing using a color printing machine is such a large scale working that film original plates are created and a machine plate is created, and it takes a lot of cost. Accordingly, it is usual that prior to perform the printing, a printer or the like, which is easier as compared with a color printing machine, is used to create a proof image that is extremely close in color to a color image to be printed by the color printing machine, and the proof image is used to confirm colors and layout of the color image.

Here, there will be explained a proof image to be created before printing of a color image including the spot color.

For example, in the event that the spot color ink is permitted to use even in an output device such as a printer for outputting a proof image, there is created the proof image in which an image portion of the spot color is constituted by the spot color ink, and an image portion other than the spot color is constituted by the process ink.

In many cases, it is not permitted for an output device to use the spot color ink. According to such an output device, hitherto, there is created a proof image in which the image portion of the spot color is color-separated into process color component, and is constituted with the process ink together with the image portion other than the spot color (for example, cf. Japanese Patent Application Laid Open Gazette Tokukai 2001-157074 (page 10, Fig. 9).

Regarding colors of both the proof image created using the process ink and the spot color and the proof image created using only the process ink, it is ideal to reproduce the same color as the color image for printing. However, actually, particularly, regarding the spot color, it is difficult to expect a sure color matching. Further, for example, in a printer wherein a halftone dot pattern is used to superpose inks, it happens that a sort of the halftone dot pattern causes a color of a proof image to be delicately varied. As described above, even if a proof image, in which a color image for printing is reproduced, is concerned, it happens that some reproduction system may reproduce particularly the spot color into a different color to such an extent that a person can visually recognize it. In such a case, it would be difficult to perform a color proof of the color image for printing, which is a primary utilization object of the proof image. The reason this is so is that even if a user is not satisfied with a color of the proof image, it is difficult for the user to discriminate whether the color of the proof image properly reflects the color for printing.

In view of the foregoing, when the proof image is used to confirm a color of a color image to be printed by a color printing machine, it is preferable that a user recognizes reproduction contents of the spot color, such as how the spot color is reproduced on the proof image, and a degree of reliability of the spot color reproduced on the proof image. However, there is a problem that observation of the proof image may be difficult for a user to easily discriminate a degree of the accuracy of the reproduction of the spot color of a color image to be actually printed. Further, there is a problem that observation of the proof image may be difficult for the user to easily discriminate, for example, whether the proof image is created using the spot color ink or using a combination of the process inks but not using the spot color ink.

### SUMMARY OF THE INVENTION

In view of the foregoing, it is an object of the present invention to provide an image processing apparatus capable of easily discriminating reproduction contents of the spot color on the proof image.

To achieve the above-mentioned object, the present invention provides a first image processing apparatus wherein when an output device is used to output a proof image reproducing a printed image in which a process color print image constituting of process colors and a spot color print image are superposed upon each other, proof image data for the output device, that is representative of the proof image, is created through processing of printing image data representative of the printed image, the image processing apparatus comprising:
an image data obtaining section that obtains the printing image data;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing a reproduction property of a spot color in the reproduction system presupposed when the image data conversion section processes printing image data; and
an image data output section that outputs to the output device the proof image data converted in the image data conversion section and the additional image data created in the additional image data creating section, so that the output device outputs the proof image and the additional image.

According to the first image processing apparatus of the present invention as mentioned above, the output device the additional image describing a reproduction property of a spot color reproduced in the proof image. Referring to the additional image makes it possible to readily confirm a degree of reliability of the spot color in the proof image. For example, in the event that a color of the proof image is unsatisfactory, it is possible to perform a proper color proof through discrimination as to whether it is caused by the original color image.

In the first image processing apparatus according to the present invention as mentioned above, it is preferable that the additional image data creating section creates additional image data representative of an additional image describing whether the spot color in the printed image is a color within a color reproduction area of the output device.

In the event that a spot color in the printed image is a color within a color reproduction area of the output device, usually, the spot color is reproduced with an accuracy sufficiently satisfying the precision of a color necessary for the color proof using the proof image. On the other hand, in the event that a spot color in the printed image is a color out of a color reproduction area of the output device, a color within the color reproduction area of the output device, which is determined by a predetermined processing, is used as the spot color in the proof image, since the output device cannot reproduce the spot color. However, it often happens that a spot color of the proof image associated with the spot color out of the color reproduction area of the output device is greatly different from the spot color in the original image to be printed. Accordingly, a description into an additional image as to whether the spot color is a color within the color reproduction area of the output device makes it possible to discriminate a degree of difference between the spot color of the printed image to be actually printed and the spot color represented in the proof image, through referring to the additional image.

In the first image processing apparatus according to the present invention as mentioned above, it is preferable that the additional image data creating section creates additional image data representative of an additional image describing with numerical values ranks where a degree of the reproduction property is divided into a plurality of ranks.

According to the preferable image processing apparatus of the present invention, the output device outputs an additional image describing a degree of the reproduction property with classified numerical values in ranking. A confirmation of the additional image makes it possible to more readily discriminate a degree of the accuracy of the reproduction of the spot color in proof image.

In the first image processing apparatus according to the present invention as mentioned, it is preferable that the additional image data creating section creates additional image data representative of an additional image associating a color chip of the spot color constituting the spot color print image with a description of reproduction property.

Confirmation of the additional image wherein a color chip is associated with a reproduction property in a spot color for each spot color makes it possible to discriminate the reproduction property in the spot color for each spot color, even if the proof image includes a plurality of spot colors.

In the first image processing apparatus according to the present invention as mentioned, it is acceptable that the additional image data creating section creates additional image data representative of an additional image describing names of spot colors constituting a spot color print image in association with a reproduction property.

Referring to the name of the spot color makes it possible to recognize a color to be reproduced originally.

To achieve the above-mentioned object, the present invention provides a second image processing apparatus wherein when an output device is used to output a proof image reproducing a printed image in which a process color print image constituting of process colors and a spot color print image are superposed upon each other, proof image data for the output device, that is representative of the proof image, is created through processing of printing image data representative of the printed image, the image processing apparatus comprising:
an image data obtaining section that obtains the printing image data having a first image data portion representative of the process color print image and a second image data portion representative of the spot color print image;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing the reproduction system for a spot color in the output device presupposed when the image data conversion section processes the second image data portion; and
an image data output section that outputs to the output device the proof image data converted in the image data conversion section and the additional image data created in the additional image data creating section, so that the output device outputs the proof image and the additional image.

According to the second image processing apparatus of the present invention as mentioned above, the output device outputs the additional image describing the reproduction system for a spot color in the output device. Confirmation of the additional image makes it possible to readily discriminate how the spot color is reproduced in the proof image. For example, in the event that a color of the proof image is unsatisfactory, it is possible to perform a proper color proof through discrimination as to whether it is caused by the original color image.

In the second image processing apparatus according to the present invention as mentioned above, it is preferable that the additional image data creating section creates additional image data representative of an additional image describing a sort of ink used when the output device reproduces the spot color.

Usually, it often happens that the spot color reproduced through using the spot color ink is closer to the spot color of the printed image to be actually printed than the spot color reproduced through a combination of the process inks. For example, confirmation of the additional image describing whether an image portion constituted with a spot color of a proof image is reproduced by spot color ink or process inks makes it possible to discriminate a degree of difference between a spot color of a printed image to be actually printed and a spot color reproduced in a proof image.

In the second image processing apparatus according to the present invention as mentioned above it is preferable that the additional image data creating section creates additional image data representative of an additional image associating a color chip of the spot color with a description of reproduction system for the spot color.

According to the above-mentioned preferred second image processing apparatus, the output device outputs additional image associating a color chip of the spot color with a description of reproduction system for the spot color. Confirmation of such an additional image makes it possible to discriminate the reproduction system for each spot color, even if the proof image is reproduced in accordance with systems in a plurality of spot colors mutually different from one another.

In the second image processing apparatus according to the present invention as mentioned, it is acceptable that the additional image data creating section creates additional image data representative of an additional image describing names of spot colors in association with a reproduction system for the spot color.

Referring to the name of the spot color makes it possible to recognize a color to be reproduced originally.

In the second image processing apparatus according to the present invention, it is acceptable that the output device reproduces the spot color by superposing inks of process colors using a specified halftone dot pattern, and
the additional image data creating section creates additional image data representative of an additional image describing a sort of the halftone dot pattern.

There is a possibility that a spot color, which is reproduced in accordance with a system wherein a halftone dot pattern is used to superpose process inks upon each other, is slightly varied by a sort of the halftone dot pattern. Accordingly, confirmation of the additional image describing a sort of the halftone dot pattern makes it possible to more clearly discriminate an aspect of the spot color reproduced in the proof image.

To achieve the above-mentioned object, the present invention provides a first image processing program storage medium storing an image processing program which causes a computer to operate as an image processing apparatus, when the image processing program is incorporated into the computer and is executed, the image processing apparatus comprising:
an image data obtaining section that obtains the printing image data;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing a reproduction property of a spot color in the reproduction system presupposed when the image data conversion section processes printing image data; and
an image data output section that outputs to the output device the proof image data converted in the image data conversion section and the additional image data created in the additional image data creating section, so that the output device outputs the proof image and the additional image.

Further, to achieve the above-mentioned object, the present invention provides a second image processing program storage medium storing an image processing program which causes a computer to operate as an image processing apparatus, when the image processing program is incorporated into the computer and is executed, the image processing apparatus comprising:
an image data obtaining section that obtains the printing image data having a first image data portion representative of the process color print image and a second image data portion representative of the spot color print image;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing the reproduction system for a spot color in the output device presupposed when the image data conversion section processes the second image data portion; and
an image data output section that outputs to the output device the proof image data converted in the image data conversion section and the additional image data created in the additional image data creating section, so that the output device outputs the proof image and the additional image.

When the programs stored in the first and second image processing program storage mediums are executed in a computer, it is possible to operate the computer as the first and second image processing apparatuses, respectively.

The first and second image processing program storage mediums include all the aspects corresponding to those of the first and second image processing apparatuses.

### BRIEF DESCRIPTION OF THE DRAWINGS

Fig. 1 is a construction view of an image processing system to which an embodiment of an image processing apparatus of the present invention is applied.
Fig. 2 is a view useful for understanding a first data conversion method.
Fig. 3 is a view useful for understanding a second data conversion method.
Fig. 4 is a view useful for understanding a third data conversion method.
Fig. 5 is a perspective view of a personal computer 50.
Fig. 6 is a hardware structural view of the personal computer 50.
Fig. 7 is a conceptual view of a CD-ROM 210 storing an image processing program stored in an image processing program storage medium according to one embodiment of the present invention.
Fig. 8 is a functional block diagram of an image processing apparatus 600.
Fig. 9 is a view showing a proof image 61.
Fig. 10 is a view showing an additional image 62.
Fig. 11 is a view showing an additional image 72.
Fig. 12 is a view showing an additional image 82.
Fig. 13 is a conceptual view of a CD-ROM 210 storing an image processing program stored in an image processing program storage medium according to another embodiment of the present invention.
Fig. 14 is a functional block diagram of an image processing apparatus 600'.
Fig. 15 is a view showing a proof image 61 in the fourth embodiment of the present invention.
Fig. 16 is a view showing an additional image 62'.
Fig. 17 is a view showing an additional image 72'.

### DETAILED DESCRIPTION OF PREFERRED EMBODIMENTS

Embodiments of the present invention will be described with reference to the accompanying drawings.

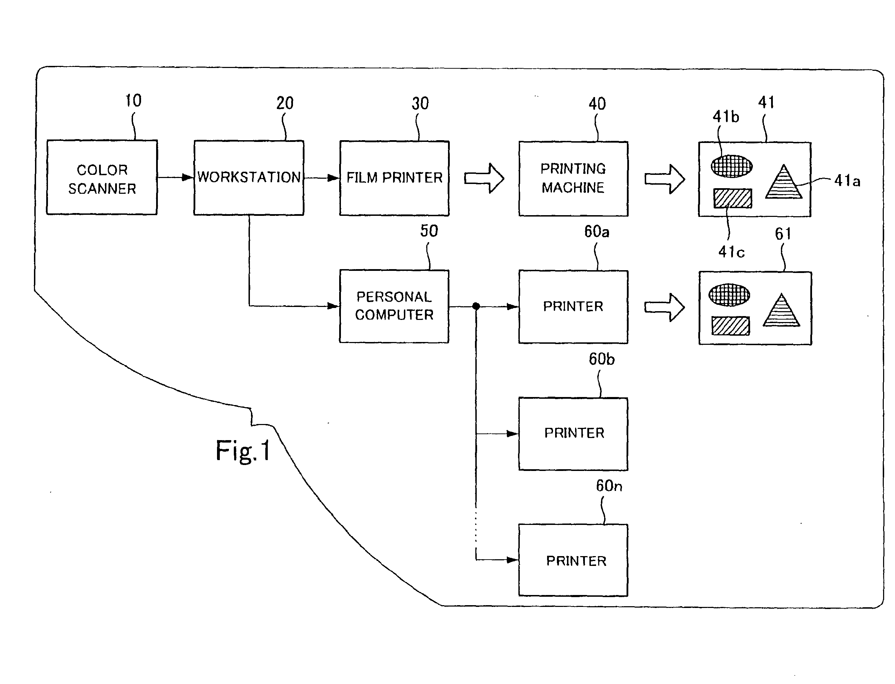

Fig. 1 is a construction view of an image processing system to which an embodiment of an image processing apparatus of the present invention is applied.

A color scanner 10 reads an original image and creates color separation image data for CMYK four colors representative of the read original image. The color separation image data is fed to a workstation 20. In the workstation 20, an operator performs an electronic page make-up in accordance with the entered color separation image data to create printing image data representative of an image for printing. Here, the operator, who operates the workstation 20, determines to perform a printing using not only the process inks for CMYK four colors, but also a certain spot color ink, and performs an electronic page make-up to design an image including the spot color. As a result, here, as the printing image data representative of an image for printing, there is created printing image data consisting of a process color print image data portion representative of a process color print image to be printed with process inks and a spot color print image data portion representative of a spot color print image to be printed with a spot color ink. The process color print image data portion is a four-dimensional image data portion representative of a process color component of CMYK four colors. The spot color print image data portion is a one-dimensional image data portion representative of a spot color component. The spot color print image data portion exists by the number of the sorts of spot color ink to be used in printing. It is noted that the spot color print image data portion includes a spot color name. The printing image data consisting of the process color print image data portion and the spot color print image data portion is fed to a film printer 30 when a printing is performed. The film printer 30 creates an original plate of a film for printing consisting of form plates of CMYK and a plate for a spot color in accordance with the entered printing image data.

A machine plate is created from the original plate of a film for printing. The machine plate thus created is mounted onto a printing machine 40. The machine plate mounted onto the printing machine 40 is applied with ink, and the applied ink is transferred to a sheet for printing, so that a printed image 41 is formed on the sheet. Usually, a printed image is formed in such a manner that the process color print image constituted with a combination of process inks for CMYK four colors is superposed on the spot color print image constituted with spot color inks. And of the printed image, an image portion, in which inks are superposed, has a mixed color. However, for the sake of convenience of the explanation, hereinafter, the explanation will be made using the printed image 41 including no image portion having a mixed color in which spot color inks are mixed, or spot color inks and process inks are mixed. The printed image 41 comprises a process color portion 41a having a mixed color of process colors, a red spot color portion 41b having a color of red spot color ink only, and a green spot color portion 41c having a color of green spot color ink only. The process color print image corresponds to an example of the process color print image referred to in the present invention. The red spot color print image and the green spot color print image correspond to an example of the spot color print image referred to in the present invention. The printed image 41 corresponds to an example of the printed image referred to in the present invention.

A work for printing the printed image 41 is such a series of large scale of work that the film printer 30 is used to create a film original plate, a machine plate is created and is mounted onto the printing machine 40, and the machine is applied with inks to perform a printing on a sheet. And this work takes a lot of cost. For this reason, prior to the actual printing work, a proof image 61 is created in the manner set forth below to confirm the finish of the printed image 41 beforehand.

To create the proof image 61, the printing image data, which is created by the electronic page make-up on the workstation 20, is fed to the personal computer 50. The printing image data to be fed to the personal computer 50 is description language data described in a so-called PDL (Page Description Language). In the personal computer 50, a so-called RIP (Raster Image Processor) is used to convert the entered printing image data to printing image data developed into a bit map. This printing image data is substantially the same as the printing image data entered to the film printer 30.

This printing image data is converted by the personal computer 50 into proof image data suitable for a printer (here, a printer 60a) which intends to output a proof image, of a plurality of printers 60a, 60b, ..., 60n.

Here, there will be described typical data conversion methods of converting the printing image data by the personal computer 50 into the proof image data suitable for the printer 60a.

First, there will be described a first data conversion method. The first data conversion method is used in the event that the printer 60a cannot use a spot color ink for the reason that the printer 60a is not associated with the spot color ink or has run out of the spot color ink, and also in the event that the printer 60a is a printer in which inks are superposed with a one sort of dot pattern or a printer in which inks are superposed without the use of any dot pattern.

According to the first data conversion method, as mentioned above, the printing image data, which consists of the process color print image data portion and the spot color print image data portion, is converted into the proof image data representative of only the process color component for the printer 60a.

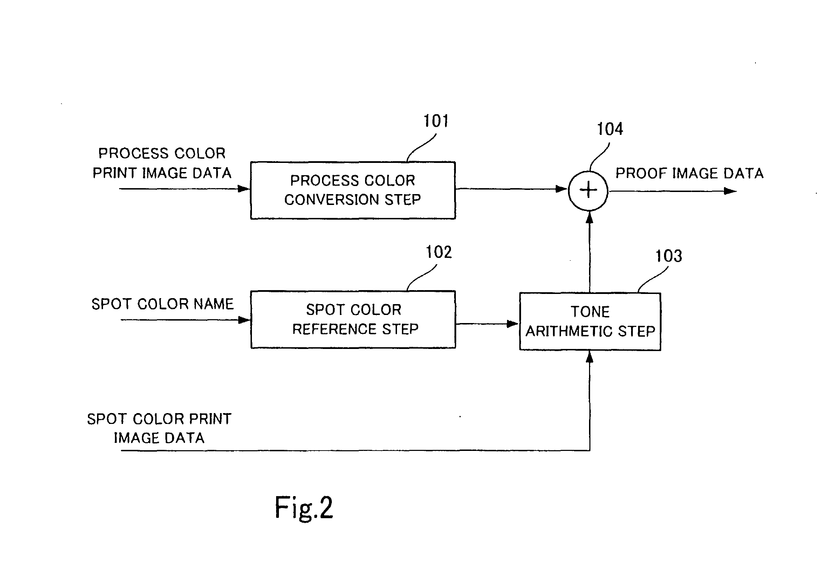

Fig. 2 is a view useful for understanding a first data conversion method. Fig. 2 shows a process color conversion step 101, a spot color reference step 102, a tone arithmetic step 103 and an addition step 104.

The personal computer 50 shown in Fig. 1 prepares beforehand a profile representative of an association between values of process color components for CMYK four colors of image data for the printing machine 40 and values of process color components for image data for the printer 60a. In the process color conversion step 101, this profile is referred to, and of the printing image data transmitted from the workstation 20 to the personal computer 50, the process color print image data portion is converted into the process image data component which is the image data component for the printer 60a.

The personal computer 50 further prepares beforehand a table representative of an association between a spot color name and a value of spot color solid data, which is image data constituted of the process color components for the printer 60a, for reproducing a color wherein density of a spot color represented by the spot color name is 100%. In the spot color reference step 102, a spot color name of a spot color ink to be used in the printing machine 40 is recognized in accordance with a name applied to the spot color print image data portion of the printing image data, and the above-mentioned table is referred to so as to obtain spot color solid data associated with the spot color name. In the tone arithmetic step 103, the spot color solid data is multiplied by the spot color print image data portion of the printing image data transmitted from the workstation 20 to the personal computer 50 to adjust the density of the spot color, so that a spot color reproduction image data component is created to reproduce a spot color with a process color.

In the addition step 104, the value of the process image data component converted in the process color conversion step 101 is added to the value of the spot color reproduction image data component created in the tone arithmetic step 103 to create proof image data.

Further, in the event that the printer 60a is a printer wherein inks are superposed by halftone dot patterns, the proof image data created in the addition step 104 is subjected to a screening processing using a predetermined halftone dot pattern.

Next, there will be described a second data conversion method. The second data conversion method is used in the event that the printer 60a cannot spot color inks, and the printer 60a is a printer in which inks are superposed by a plurality of halftone dot patterns. Also in the second data conversion method, the printing image data is converted into the proof image data representative of the process color component for the printer 60a.

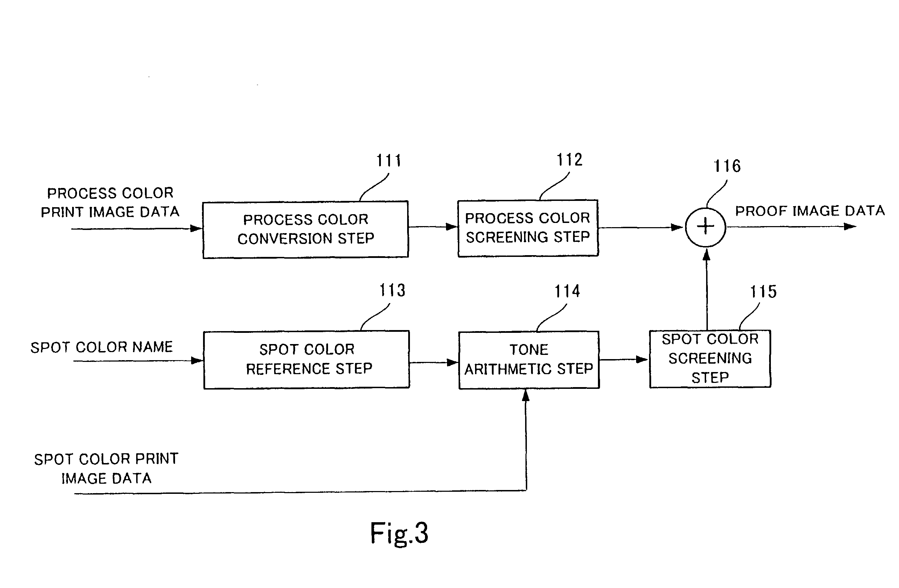

Fig. 3 is a view useful for understanding the second data conversion method. Fig. 3 shows, in a similar fashion to that of the first data conversion method shown in Fig. 2, a process color conversion step 111, a spot color reference step 113, and a tone arithmetic step 114, and further shows a process color screening step 112 and a spot color screening step 115. A synthesizing section 116 is shown instead of the addition step 104 in the first data conversion method.

In a similar fashion to that of the first data conversion method, in the process color conversion step 111, of the printing image data, the process color print image data portion is converted into the process image data component which is the image data component for the printer 60a. Then in the process color screening step 112, a screening processing is applied to the process image data component using a predetermined halftone dot pattern for each process color.

In a similar fashion to that of the first data conversion method, in the spot color reference step 113, and the tone arithmetic step 114, the spot color reproduction image data component is created. Then, in the spot color screening step 115, the spot color reproduction image data component is subjected to a screening processing using such a halftone dot pattern that a color of image portion represented by the spot color reproduction image data component is closed to a spot color of the printed image 41 as much as possible.

In the synthesizing section 116, a halftone dot geometry represented by the process image data component after the screening processing is synthesized with a halftone dot geometry represented by the spot color reproduction image data component for each process color to create proof image data. According to the second data conversion method, the image portion constructed with the spot color of the proof image can be expressed by a halftone dot pattern adjusted in such a manner that a spot color of the image portion is closed to a spot color of the printed image as much as possible. Thus, according to the second data conversion method, it is possible to reproduce a color closer to the color of the printed image 41, as compared with the first data conversion method.

Next, there will be explained a third data conversion method. The third data conversion method is used in the event that the printer 60a can use spot inks. According to the third data conversion method, different from the first data conversion method and the second data conversion method, the printing image data is converted into the proof image data consisting of the process color image data component representative of the process color component for the printer 60a and the spot color image data component representative of the spot color component.

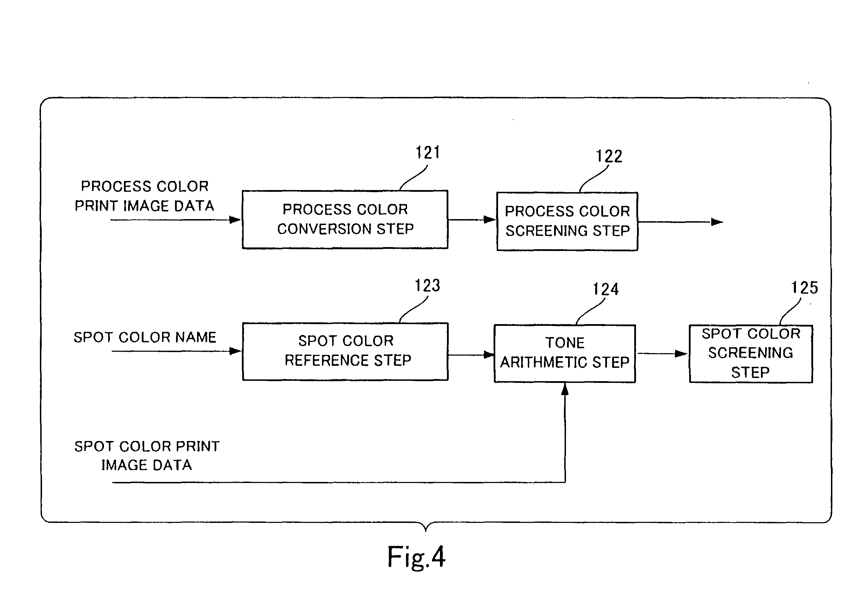

Fig. 4 is a view useful for understanding a third data conversion method. Fig. 4 shows, in a similar fashion to that of the second data conversion method shown in Fig. 3, a process color conversion step 121, a process color screening step 122, a spot color reference step 123, a tone arithmetic step 124, and a spot color screening step 115. But Fig. 4 fails to show a portion corresponding to the addition step 104 of Fig. 2 and the synthesizing section 116 of Fig. 3.

In a similar fashion to that of the second data conversion method, in the process color conversion step 121 and the process color screening step 122, of the printing image data, the process color print image data portion is converted into the process image data component for the printer 60a which is subjected to the screening processing.

Regarding the spot color print image data portion, in the spot color reference step 113, the tone arithmetic step 114, and the spot color screening step 115, it is converted into the spot color image data component for the printer 60a, which is subjected to the screening processing.

According to the third data conversion method, the process image data component for the printer 60a which is subjected to the screening processing is not added to the spot color image data component for the printer 60a, which is subjected to the screening processing, and there is created proof image data consisting of the process image data component and the spot color image data component. According to the third data conversion method, the use of spot inks of colors closed to the spot colors used in the printing machine 40 makes it possible to more stably reproduce colors closed to the colors of the printed image 41 as compared with the first data conversion method and the second data conversion method.

Thus, a creation of a proof image to confirm the proof image makes it possible to confirm a finish of printing beforehand.

An aspect of the image processing system shown in Fig. 1, as the embodiment of the present invention, resides in processing contents to be executed in the personal computer 50. Hereinafter, there will be explained the personal computer 50.

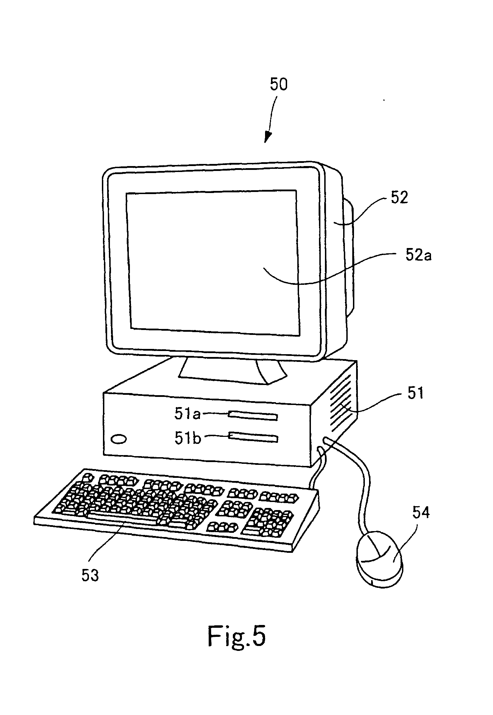

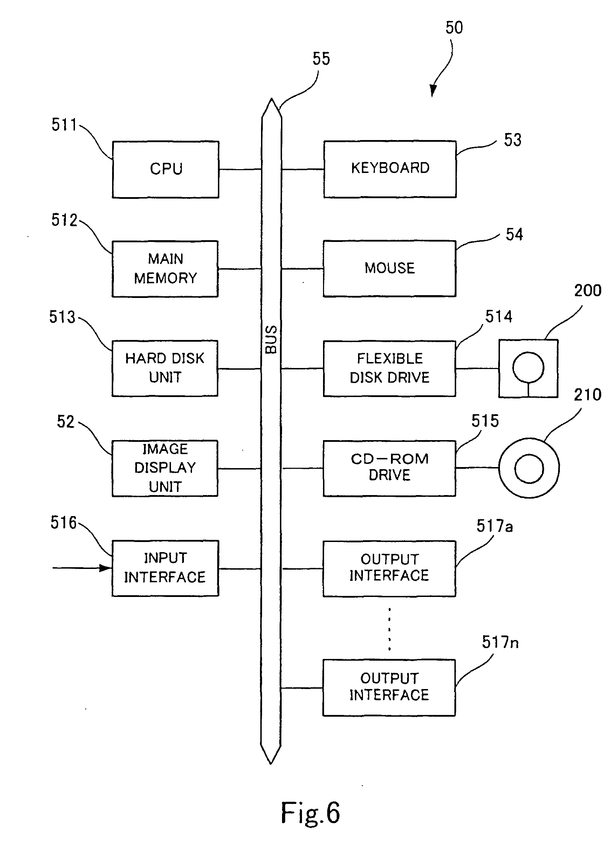

Fig. 5 is a perspective view of a personal computer 50. Fig. 6 is a hardware structural view of the personal computer 50.

The personal computer 50 comprises, on an external appearance, a main frame unit 51, an image display unit 52 for displaying an image on a display screen 52a in accordance with an instruction from the main frame unit 51, a keyboard 53 for inputting various sorts of information to the main frame unit 51 in accordance with a key operation, and a mouse 54 for inputting an instruction according to, for example, an icon and the like, through designation of an optional position on the display screen 52a, the icon and the like being displayed on the position on the display screen 52a. The main frame unit 51 has a flexible disk mounting slot 51a for mounting a flexible disk, and a CD-ROM mounting slot 51b for mounting a CD-ROM.

The main frame unit 51 comprises, as shown in Fig. 6, a CPU 511 for executing a various types of program, a main memory 512 in which a program stored in a hard disk unit 513 is read out and developed for execution by the CPU 511, the hard disk unit 513 for saving various types of programs and data, a flexible disk drive 514 for accessing a flexible disk 200 mounted thereon, a CD-ROM drive 515 for accessing a CD-ROM 210 mounted thereon, an input interface 516 connected to the workstation 20 of Fig. 1 to receive image data from the workstation 20, and output interfaces 517a, ... 517n connected to the printers 60a, ... 60n in Fig. 1, respectively, to transmit image data to the printers 60a, ... 60n. These various types of elements are connected via a bus 55 to the image display unit 52, the keyboard 53 and the mouse 54.

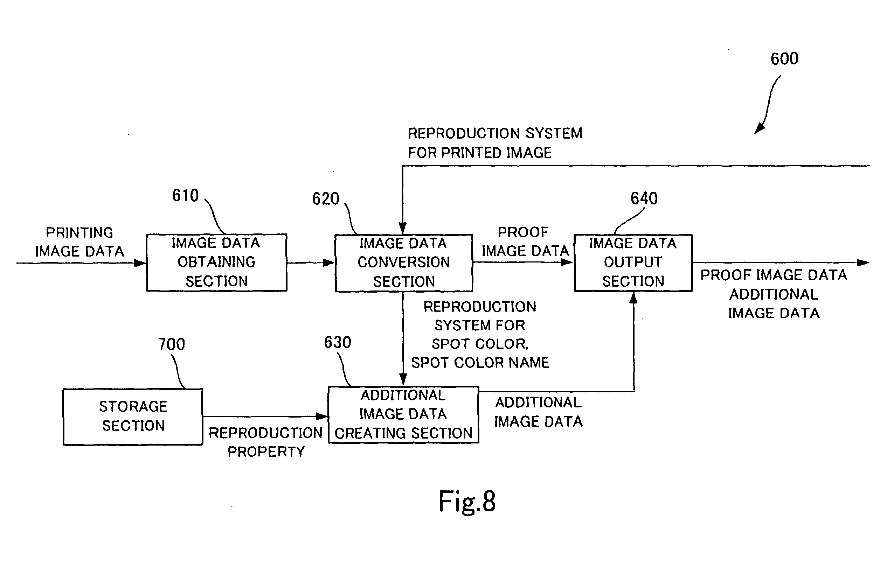

The CD-ROM 210 stores therein an image processing program for causing the personal computer 50 to operate as an embodiment of an image processing apparatus of the present invention. The CD-ROM 210 is mounted on the CD-ROM drive 515 so that the image processing program, which is stored in the CD-ROM 120, is up-loaded on the personal computer 50 and is stored in the hard disk unit 513. Thus, the personal computer 50 operates as an image processing apparatus 600 (that will be described latter) in Fig. 8, which is an embodiment of the present invention.

Next, there will be described an image processing program, which will be executed in the personal computer 50.

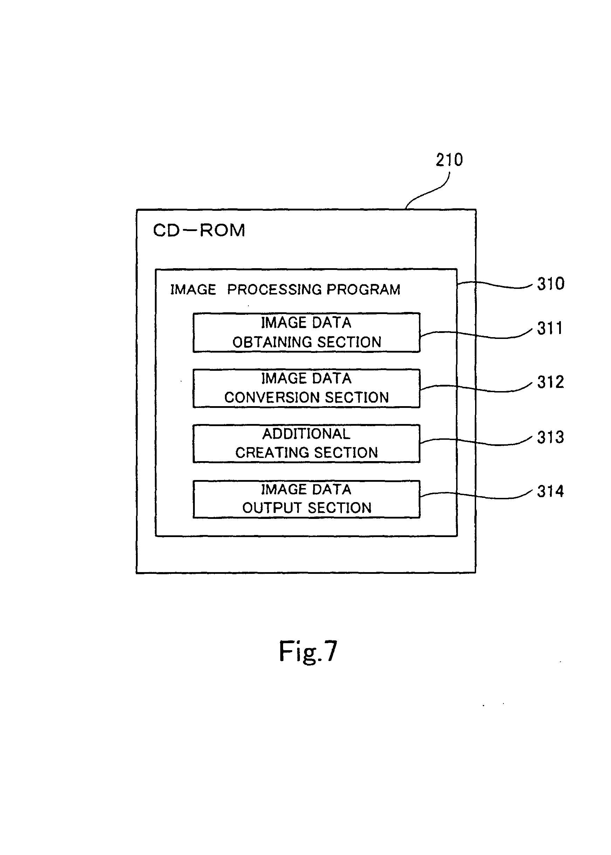

Fig. 7 is a conceptual view of a CD-ROM 210 storing an image processing program stored in an image processing program storage medium according to one embodiment of the present invention.

An image processing program 310 comprises an image data obtaining section 311, an image data conversion section 312, an additional image data creating section 313, and an image data output section 314. The image data obtaining section 311 corresponds to an example of the image data obtaining section in the image processing program stored in the image processing program storage medium of the present invention. Likely, the image data conversion section 312, the additional image data creating section 313, and the image data output section 314 correspond to examples of the image data conversion section, the addition image data creating section, and the image data output section in the image processing program stored in the image processing program storage medium of the present invention, respectively. Details of the respective sections of the image processing program 310 will be explained together with the effect of the respective sections of an image processing apparatus 600 shown in Fig. 8, which is an embodiment of the image processing apparatus of the present invention.

Fig. 8 is a functional block diagram of the image processing apparatus 600, wherein the image processing program 310 is installed in the personal computer 50 in Fig. 1 so that the personal computer 50 is operated as an embodiment of the image processing apparatus of the present invention.

The image processing apparatus 600 shown in Fig. 8 comprises an image data obtaining section 610, an image data conversion section 620, an additional image data creating section 630, and an image data output section 640. A storage section 700, which corresponds to the hard disk unit 513 in Fig. 6, stores beforehand an association between spot color names and a reproduction system (which will be described later), and a reproduction property of the printer 60a in Fig. 1 wherein a spot color is reproduced in accordance with the reproduction system.

When the image processing program 310 is installed in the personal computer 50, the image data obtaining section 311 of the image processing program 310 in Fig. 7 constitutes the image data obtaining section 610 in Fig. 8. Likely, the image data conversion section 312, the additional image data creating section 313, and the image data output section 314 constitute the image data conversion section 620, the additional image data creating section 630, and the image data output section 640, respectively.

The image data obtaining section 610 receives the printing image data consisting of the process color print image data portion and the spot color print image data portion from the workstation 20 in Fig. 1 via the input interface 516 in Fig. 6. The image data obtaining section 610 corresponds to an example of the image data obtaining section in the image processing apparatus of the present invention. The printing image data thus obtained is transmitted to the image data conversion section 620.

The image data conversion section 620 converts the printing image data entered from the image data obtaining section 610 to the proof image data, using the above-mentioned data conversion method, in accordance with the reproduction system of the printed image 41 in the printer 60a shown in Fig. 1. The reproduction system referred to here implies a sort of inks and a sort of dot patterns, which are to be used for reproducing spot colors. This reproduction system corresponds to an example of the reproduction system of the printed image referred to in the present invention. The image data conversion section 620 corresponds to an example of the image data conversion section in the image processing apparatus of the present invention. The converted proof image data is transmitted to the image data output section 640. The image data conversion section 620 recognizes at the time of the data conversion the spot color name of the spot color to be reproduced in accordance with the name applied to the spot color print image data portion of the printing image data, and the recognized spot color name and the reproduction system for the spot color are transmitted to the additional image data creating section 630.

The additional image data creating section 630 receives from the storage section 700 the spot color name obtained from the image data conversion section 620 and the reproduction property associated with the reproduction system, and creates additional image data representative of an additional image describing the reproduction property. The additional image data creating section 630 corresponds to an example of the additional image data creating section in the image processing apparatus of the present invention. The created additional image data is transmitted to the image data output section 640.

The image data output section 640 outputs to the printer 60a in Fig. 1 the proof image data entered from the image data conversion section 620 and the additional image data entered from the additional image data creating section 630. The image data output section 640 corresponds to an example of the image data output section in the image processing apparatus of the present invention.

The image processing apparatus 600 is basically constructed in the manner as mentioned above. Next, there will be explained the procedure of creating the proof image 61 of the printed image 41 using the image processing apparatus 600.

First, the image data obtaining section 610 obtains from the workstation 20 in Fig. 1 the printing image data consisting of a process color print image data portion representative of a process print image, a red spot color print image data portion representative of a red spot color print image including a red spot color portion 41b, and a green spot color print image data portion representative of a green spot color print image including a green spot color portion 41c. This printing image data corresponds to an example of the printing image data referred to in the present invention. The obtained printing image data is outputted to the image data conversion section 620.

When the image data conversion section 620 receives the printing image data from the image data obtaining section 610, the image data conversion section 620 converts the printing image data into the proof image data in accordance with the reproduction system of printed image 41 in the printer 60a of Fig. 1. For example, in the event that the printer 60a is a dot printer in which a plurality of halftone dots is used to superpose inks, and spot inks cannot be used, the image data conversion section 620 converts the printing image data into the proof image data in accordance with the above-mentioned second data conversion method. The converted proof image data is transmitted to the image data output section 640, while the spot color name recognized at the time of data conversion and the reproduction system for the spot color are transmitted to the additional image data creating section 630.

Upon receipt of the spot color name and the reproduction system for the spot color from the image data conversion section 620, the additional image data creating section 630 obtains from the storage section 700 the reproduction property for the spot color associated with the spot color name and the reproduction system for the spot color. Further, the additional image data creating section 630 creates additional image data representative of an additional image associating the reproduction property for the spot color obtained from the storage section 700 with a color chip of the spot color, and outputs the created additional image data to the image data output section 640.

The image data output section 640 outputs the proof image data and the additional image data, which are entered from the image data conversion section 620 and the additional image data creating section 630, respectively, via the output interface 517a in Fig. 6 to the printer 60a in Fig. 1.

The printer 60a receives the proof image data from the image data output section to create the proof image in accordance with the proof image data.

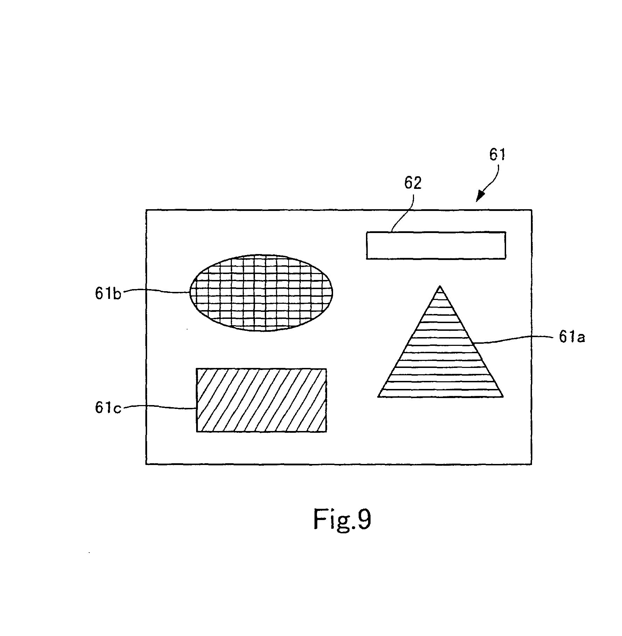

Fig. 9 is a view showing a proof image 61. The proof image 61 comprises a process image portion 61a corresponding to the process color portion 41a of the printed image 41, a red spot color image portion 61b corresponding to the red spot color portion 41b, and a green spot color image portion 61c corresponding to the green spot color portion 41c. Further, an additional image 62 is added. The process image portion 61a is constituted of process inks. The red spot color image portion 61b and the green spot color image portion 61c represent red and green of spot colors by a combination of process inks, respectively. The proof image 61 corresponds to an example of the proof image referred to in the present invention. Regarding a reliability of the proof image 61 as to a reproduction property of the spot color (colors of the red spot color image portion 61b and the green spot color image portion 61c) of the proof image 61 for the spot color (colors of the red spot color image portion 41b and the green spot color image portion 41c) of the printed image 41, it would be difficult to determine the reliability of the proof image 61 through an observation of the proof image 61 only.

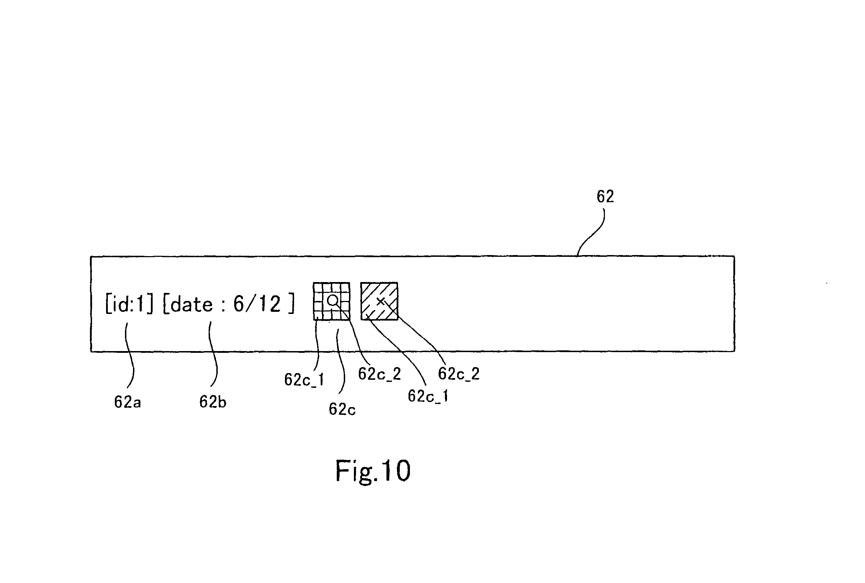

Fig. 10 is a view showing the additional image 62. The additional image 62 consists of an image ID display portion 62a, a date display portion 62b, and a reproduction property display portion 62c. The image ID display portion 62a represents an image ID of the printed image 41. According to the present embodiment, it is discriminated that the image ID of the printed image 41 is 1. The date display portion 62b indicates the data wherein the proof image 61 is created. According to the present embodiment, it is discriminated that the proof image 61 is created on June 12. The reproduction property display portion 62c represents reproduction property for each spot color, and consists of a color chip 62c_1 reproducing a spot color and a symbol 62c_2 indicative of whether the spot color is a color (a color within a color reproduction area) which can be expressed by the printer 60a. According to the present embodiment, it is discriminated that the spot color of the printed image 41 corresponding to the red color chip 62c_1 of the left side is a color capable of being expressed by the printer 60a, and the color of the red spot color image portion 61b of the proof image 61 is close to the color of the red spot color portion 41b of the printed image 41 to some extent. Further, it is discriminated that the spot color of the printed image 41 corresponding to the green color chip 62c_1 of the right side is a color not capable of being expressed by the printer 60a, and since the green spot color image portion 61c of the proof image 61 is constituted of a color determined in accordance with a predetermined processing, a reliability for the color of the green spot color image portion 61c is low. The color chip 62c_1 of the reproduction property display portion 62c corresponds to an example of the color chip referred to in the present invention, and the symbol 62c_2 described in the color chip corresponds to an example of the description of "whether the color is a color within the color reproduction area" referred to in the present invention. Thus, as to the proof image 61 created using the image processing apparatus 600 according to the present embodiment, a confirmation of the additional image 62 makes it possible to readily discriminate a reliability of the spot color reproduced on the proof image.

With the above description, the explanation of the first embodiment of the present invention will be terminated, and then next there will be explained an image processing apparatus according to the second embodiment of the present invention. The image processing apparatus according to the second embodiment has the same structure of the image processing apparatus according to the first embodiment shown in Fig. 8, but it is different from the image processing apparatus according to the first embodiment in the point that a form of an additional image to be created is varied.

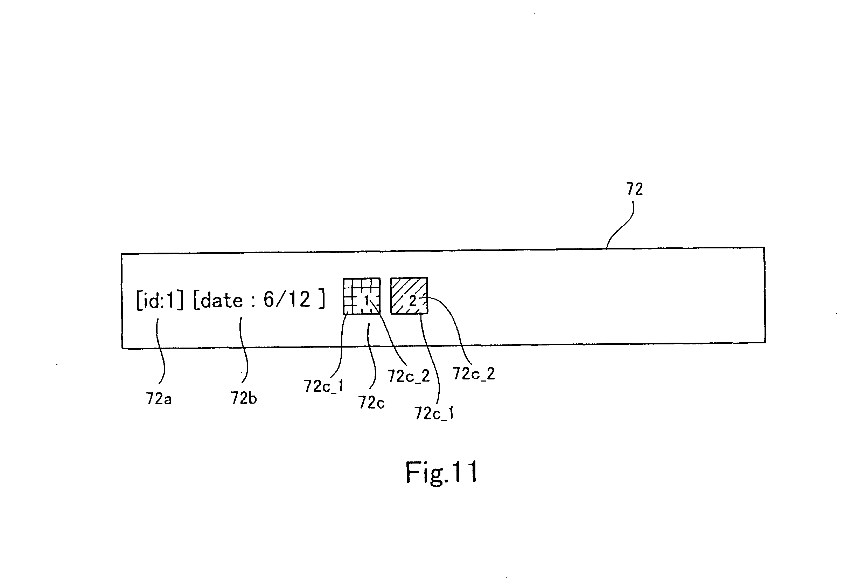

Fig. 11 is a view showing an additional image 72 represented by additional image data created in an additional image data creating section of an image processing apparatus according to the second embodiment of the present invention.

The additional image 72 consists of an image ID display portion 72a, a date display portion 72b, and a reproduction property display portion 72c. According to the reproduction property display portion 62c of the additional image 62 of the first embodiment shown in Fig. 10, the color chip 62c_1 of the spot color is associated with the symbol 62c_2 indicative of whether the spot color is a color which can be expressed by the printer 60a. On the other hand, according to the reproduction property display portion 72c of the additional image 72, the color chip 72c_1 of the spot color is associated with the symbol 72c_2 indicative of a rank where the reproduction property of the spot color is classified into a plurality of ranks. According to the present embodiment, the greater number of the symbol 72c_2 indicates that the spot color of the proof image 61 is greater different from the spot color of the printed image 41. According to the present embodiment, the reproduction property of the red spot color image portion 61b including the spot color of the color chip 72c_1 of the left side belongs to the class 1, and the reproduction property of the green spot color image portion 61c including the spot color of the color chip 72c_1 of the right side belongs to the class 2. For example, it is confirmed that the color of the red spot color image portion 61b is sufficiently reliable, and while the color of the green spot color image portion 61c is slightly poor in the reproduction property, it is reliable to some extent. The number of the symbol 72c_2 described in the spot color of the color chip 72c_1 corresponds to an example of "numeral values of ranks where a degree of the reproduction property is classified into a plurality of ranks". Thus, a description of the numeral values expressing the reproduction property of the spot color onto the additional image makes it possible to more readily discriminate between the reproduction properties of the spot color.

With the above description, the explanation of the second embodiment of the present invention will be terminated, and then next there will be explained an image processing apparatus according to the third embodiment of the present invention. The image processing apparatus according to the third embodiment has the same structure of the image processing apparatus according to the first embodiment shown in Fig. 8, but it is different from the image processing apparatuses according to the first and second embodiments in the point that a form of an additional image to be created is varied.

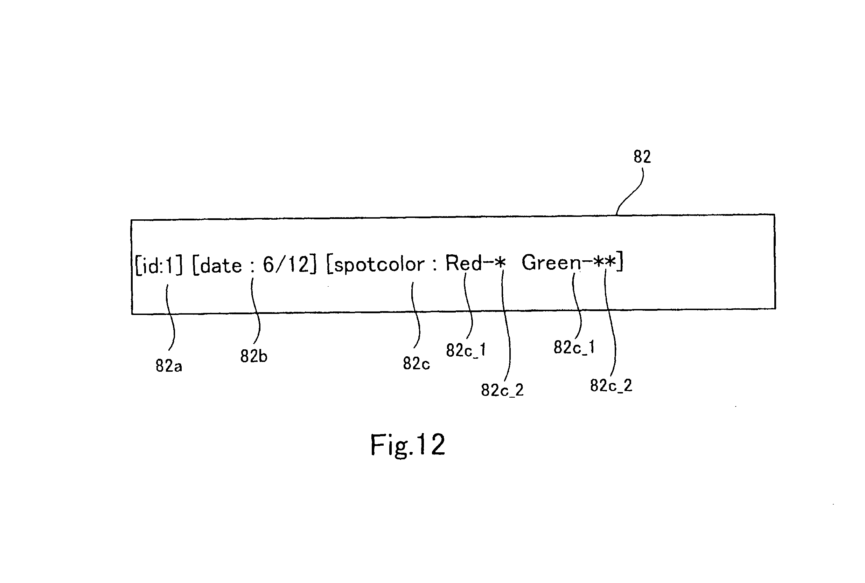

Fig. 12 is a view showing an additional image 82 represented by additional image data created in an additional image data creating section of an image processing apparatus according to the third embodiment of the present invention.

The additional image 82 consists of an image ID display portion 82a, a date display portion 82b, and a reproduction property display portion 82c. According to the reproduction property display portion 72c of the additional image 72 of the second embodiment shown in Fig. 11, the color chip 72c_1 of the spot color is associated with the symbol 72c_2 indicative of a rank where the reproduction property of the spot color is classified into a plurality of ranks. On the other hand, according to the reproduction property display portion 82c of the additional image 82, a color name 82c_1 of the spot color is described instead of the color chip 72c_1 of the spot color, and a symbol 82c_2 indicative of a rank is described instead of the symbol 72c_2 indicative of a rank. According to the present embodiment, a mark " * " is used for the symbol 82c_2 indicative of rank. The number of the marks " * " represents the rank. According to the present embodiment, the reproduction property of the red spot color belongs to the class 1, and the reproduction property of the green spot color belongs to the class 2. The color name 82c_1 of the reproduction property display portion 82c corresponds to an example of the color name referred to in the present invention. It is acceptable that the additional image data creating section referred to in the present invention creates additional image data representative of an additional image in which a color name for a spot color is associated with a reproduction property. Further it is acceptable that the additional image data creating section referred to in the present invention represents ranks of the reproduction property by the number of symbols but not numerals.

In the above description, there is explained an image processing apparatus that creates an additional image describing a reproduction property for a spot color stored in a storage section beforehand. It is acceptable, however, that the image processing apparatus referred to in the present invention creates additional image data describing a reproduction property for a spot color, which is computed from for example, an image data portion representative of a spot color of the printing image data and an image data portion representative of a spot color of the proof image data.

Further, in the above description, there is explained an image processing apparatus that creates an additional image in which a color chip of a spot color is associated with a reproduction property, or a color name of a spot color is associated with a reproduction property. It is acceptable, however, that the image processing apparatus referred to in the present invention creates additional image describing a reproduction property only.

Further, according to the image processing apparatus as mentioned above, a degree of the reproduction property is expressed by numerical values ranked in such a manner that it is expressed that as the numerical number is greater the spot color of the proof image is more greatly different from the spot color of the printed image. However, according to the image processing apparatus, it is acceptable that for example, reversely, a degree of the reproduction property is expressed by numerical values ranked in such a manner that it is expressed that as the numerical number is greater the spot color of the printed image is more accurately reproduced.

Furthermore, in the above description, there is explained an image processing apparatus by way of example using a one-dimensional spot color print image data portion, which exist by the number of spot colors used in a printing. However, it is acceptable that an image processing apparatus of the present invention uses, for example, a spot color print image data portion having the same number of dimensions as the number of spot colors.

Still further, in the above description, there is explained an image processing apparatus that creates a proof image to which an additional image is added. However, it is acceptable for the image processing apparatus of the present invention that the additional image is created independently of the proof image.

Next, there will be explained a fourth embodiment of the present invention.

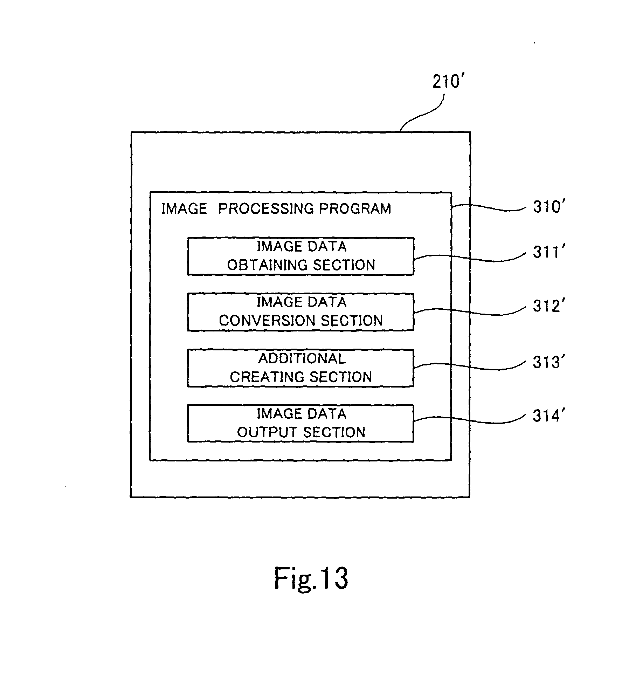

Fig. 13 is a conceptual view of a CD-ROM 210' storing an image processing program stored in an image processing program storage medium according to another embodiment of the present invention.

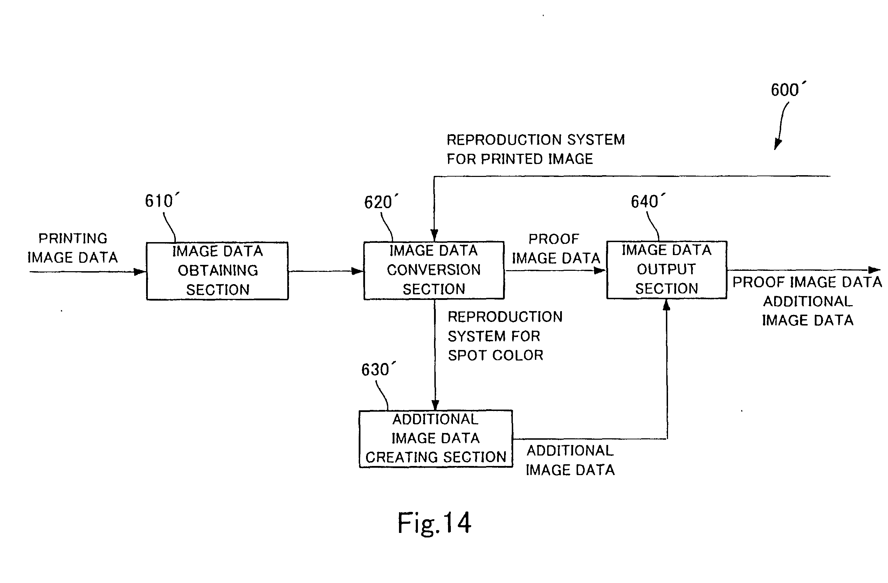

An image processing program 310' comprises an image data obtaining section 311', an image data conversion section 312', an additional image data creating section 313', and an image data output section 314'. The image data obtaining section 311' corresponds to an example of the image data obtaining section in the image processing program stored in the image processing program storage medium of the present invention. Likely, the image data conversion section 312', the additional image data creating section 313', and the image data output section 314' correspond to examples of the image data conversion section, the addition image data creating section, and the image data output section in the image processing program stored in the image processing program storage medium of the present invention, respectively. Details of the respective sections of the image processing program 310' will be explained together with the effect of the respective sections of an image processing apparatus 600' shown in Fig. 14, which is the fourth embodiment of the image processing apparatus of the present invention.

Fig. 14 is a functional block diagram of the image processing apparatus 600', wherein the image processing program 310' is installed in the personal computer 50 in Fig. 1 so that the personal computer 50 is operated as the fourth embodiment of the image processing apparatus of the present invention.

The image processing apparatus 600' shown in Fig. 14 comprises an image data obtaining section 610', an image data conversion section 620', an additional image data creating section 630', and an image data output section 640'.

When the image processing program 310' is installed in the personal computer 50, the image data obtaining section 311 of the image processing program 310' in Fig. 13 constitutes the image data obtaining section 610' in Fig. 14. Likely, the image data conversion section 312', the additional image data creating section 313', and the image data output section 314' constitute the image data conversion section 620', the additional image data creating section 630', and the image data output section 640', respectively.

The image data obtaining section 610' receives the printing image data consisting of the process color print image data portion and the spot color print image data portion from the workstation 20 in Fig. 1 via the input interface 516 in Fig. 6. The image data obtaining section 610' corresponds to an example of the image data obtaining section in the image processing apparatus of the present invention. The printing image data thus obtained is transmitted to the image data conversion section 620'.

The image data conversion section 620' converts the printing image data entered from the image data obtaining section 610' to the proof image data, using the above-mentioned data conversion method, in accordance with the reproduction system of the printed image 41 in the printer 60a shown in Fig. 1. The reproduction system referred to here implies a sort of inks and a sort of dot patterns, which are to be used for reproducing spot colors. This reproduction system corresponds to an example of the reproduction system of the printed image referred to in the present invention. The image data conversion section 620' corresponds to an example of the image data conversion section in the image processing apparatus of the present invention. The converted proof image data is transmitted to the image data output section 640'.

The additional image data creating section 630' creates additional image data representative of an additional image describing a reproduction system for spot colors, of the reproduction system of the printed image 41 established as a premise in the image data conversion section 620'. The reproduction system for spot colors referred to here implies a sort of inks which are to be used for reproducing spot colors, and a sort of dot patterns constituting a spot color. This reproduction system for spot colors corresponds to an example of the reproduction system for spot color referred to in the present invention. The additional image data creating section 630' corresponds to an example of the additional image data creating section in the image processing apparatus of the present invention. The created additional image data is transmitted to the image data output section 640'.

The image data output section 640' outputs to the printer 60a in Fig. 1 the proof image data entered from the image data conversion section 620' and the additional image data entered from the additional image data creating section 630'. The image data output section 640' corresponds to an example of the image data output section in the image processing apparatus of the present invention.

The image processing apparatus 600' is basically constructed in the manner as mentioned above. Next, there will be explained the procedure of creating the proof image 61 of the printed image 41 using the image processing apparatus 600'.

First, the image data obtaining section 610' obtains from the workstation 20 in Fig. 1 the printing image data consisting of a process color print image data portion representative of a process print image, a red spot color print image data portion representative of a red spot color print image including a red spot color portion 41b, and a green spot color print image data portion representative of a green spot color print image including a green spot color portion 41c. The process color print image data portion corresponds to an example of the first image data portion. The red spot color print image data portion and the green spot color print image data portion correspond to an example of the second image data portion. The printing image data corresponds to an example of the printing image data referred to in the present invention. The obtained printing image data is outputted to the image data conversion section 620'.

When the image data conversion section 620' receives the printing image data from the image data obtaining section 610', the image data conversion section 620' converts the printing image data into the proof image data in accordance with the reproduction system of printed image 41 in the printer 60a of Fig. 1. For example, it is assumed that the printer 60a is a dot printer in which a plurality of halftone dots is used to superpose inks, and reproduction systems of the printed image 41 in the printer 60a are systems wherein
(1) a color of the red spot color ink is reproduced by a combination of process inks,
(2) a color of the green spot color ink is reproduced using the green spot color ink for the printer 60a,
(3) when a spot color is reproduced with spot color ink, the ink is put using the halftone dot pattern 1,
(4) when a spot color is reproduced with process inks, the process inks are superposed using the halftone dot pattern 2, and
(5) when a process color for printing is reproduced, the process inks are superposed using the halftone dot pattern 1. The image data conversion section 620 converts the printing image data into the proof image data: applying the above-mentioned second data conversion method to the red spot color print image data portion associated with the red spot color portion 41b to be printed with the red spot color ink, presupposing the reproduction system (1) and the reproduction system (4); applying the third data conversion method to the green spot color print image data portion associated with the green spot color portion 41c to be printed with the green spot color ink, presupposing the reproduction system (2) and the reproduction system (3); and applying the second data conversion method to the process color print image data portion, presupposing the reproduction system (5). The converted proof image data is transmitted to the image data output section 640'.

The additional image data creating section 630' creates additional image data representative of an additional image describing the reproduction systems for the spot colors (the reproduction system (1) to the reproduction system (4)), of the reproduction systems of the printed image, and outputs the created additional image data to the image data output section 640'.

The image data output section 640' outputs the proof image data and the additional image data, which are entered from the image data conversion section 620' and the additional image data creating section 630', respectively, via the output interface 517a in Fig. 6 to the printer 60a in Fig. 1.

The printer 60a receives the proof image data from the image data output section to create the proof image in accordance with the proof image data.

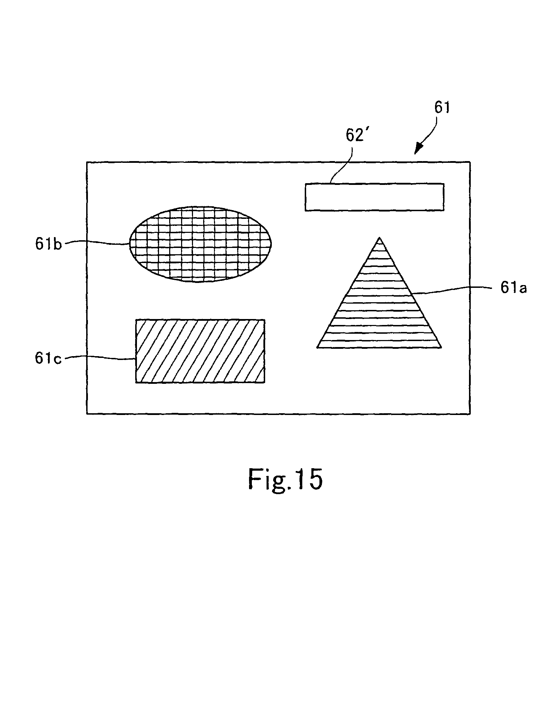

Fig. 15 is a view showing the proof image 61 in the fourth embodiment of the present invention. The proof image 61 comprises a process image portion 61a corresponding to the process color portion 41a of the printed image 41, a red spot color image portion 61b corresponding to the red spot color portion 41b, and a green spot color image portion 61c corresponding to the green spot color portion 41c. Further, an additional image 62' is added. The process image portion 61a is constituted of process inks. The red spot color image portion 61b is constituted of a combination of process inks. The green spot color image portion 61c is constituted of green spot colors. The proof image 61 corresponds to an example of the proof image referred to in the present invention. Regarding a sort of inks used in the proof image 61, it would be difficult to discriminate between inks of the proof image 61 through an observation of the proof image 61 only.

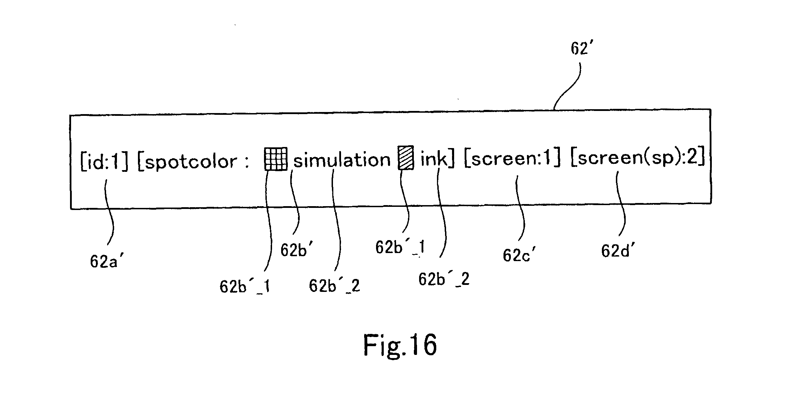

Fig. 16 is a view showing an additional image 62'. The additional image 62' consists of an image ID display portion 62a', an ink sort display portion 62b', and two halftone dot pattern display portions 62c' and 62d'. The image ID display portion 62a' represents an image ID of the printed image 41. According to the present embodiment, it is discriminated that the image ID of the printed image 41 is 1. The ink sort display portion 62b'represents a spot color and a sort of inks used to express the spot color, and consists of a color chip 62b'_1 for the spot color and an ink sort 62b'_2. According to the present embodiment, it is discriminated that the red spot color is constituted of a "simulation" (a combination of the process inks), and the green spot color is constituted of "ink" spot color ink). Of the two halftone dot pattern display portions 62c' and 62d', the halftone dot pattern display portion 62c' represents a sort of the halftone dot pattern used when the spot color is reproduced with the spot color ink, and the halftone dot pattern display portions 62d' represents a sort of the halftone dot pattern used when the spot color is reproduced with a combination of the process inks. According to the present embodiment, it is discriminated that a halftone dot pattern 1 is used for the green spot color image portion 61c using a spot color ink, and a halftone dot pattern 2 is used for the red spot color image portion 61b using process inks. The color chip 62b'_1 of the ink sort display portion 62b' corresponds to an example of the color chip referred to in the present invention, and the display of "simulation" and "ink" of the ink sort 62b'_2 corresponds to an example of the description of the sort of ink referred to in the present invention. Further, the display of the halftone dot pattern display portion 62d' corresponds to an example of the description of the sort of the halftone dot pattern referred to in the present invention. Thus, as to the proof image 61 created using the image processing apparatus 600' according to the present embodiment, a confirmation of the additional image 62' makes it possible to readily discriminate how the spot color image portion is created.

With the above description, the explanation of the fourth embodiment of the present invention will be terminated, and then next there will be explained an image processing apparatus according to the fifth embodiment of the present invention. The image processing apparatus according to the fifth embodiment has the same structure of the image processing apparatus according to the fourth embodiment shown in Fig. 14, but it is different from the image processing apparatus according to the fourth embodiment in the point that a form of an additional image to be created is varied. In order to avoid the redundancy, there will be described different points, hereinafter.

In a similar fashion to that of the fourth embodiment, the image data obtaining section obtains the printing image data from the workstation 20 shown in Fig. 1, and transmits the obtained printing image data to the image data conversion section.

Also in the image data conversion section, in a similar fashion to that of the fourth embodiment, the printing image data is converted into the proof image data presupposing the reproduction system for the printed image 41, and outputs the proof image data to the image data output section.

While the additional image data creating section creates, in a similar fashion to that of the fourth embodiment, the additional image data representative of an additional image describing the reproduction system of the spot color, the additional image is different in the form from the additional image represented by the additional image data created by the additional image data creating section 630' in the fourth embodiment.

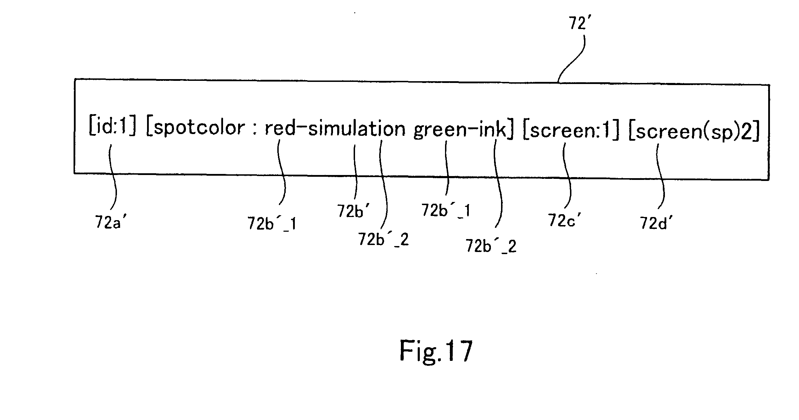

Fig. 17 is a view showing an additional image 72' represented by additional image data created in an additional image data creating section of the present embodiment.

The additional image 72' consists of an image ID display portion 72a', an ink sort display portion 72b', and two halftone dot pattern display portions 72c' and 72d'. In the ink sort display portion 62b' of the additional image 62' shown in Fig. 16, the color chip 62b'_1 of the spot color is associated with the ink sort 62b'_2. On the other hand, in the ink sort display portion 72b' of the additional image 72' shown in Fig. 17, a color name 72b'_1 of the spot color is associated with an ink sort 72b' 2. The color name 72b'_1 of the ink sort display portion 72b' corresponds to an example of the color name referred to in the present invention.

The additional image data created in the additional image data creating section is transmitted to the image data output section. The image data output section outputs, in a similar fashion to that of the fourth embodiment, the proof image data and the additional image data to the printer 60a in Fig. 1.

As mentioned above, it is acceptable that the additional image data creating section referred to in the present invention creates the additional image data representative of the additional image in which a color name of a spot color is associated with a reproduction system for an ink sort.

In the above description, there is explained an image processing apparatus that creates an additional image describing only a reproduction system for a spot color. It is acceptable, however, that the image processing apparatus referred to in the present.invention creates additional image describing a reproduction system for process colors together, for example, halftone dot patterns used in the image portion of process colors of the proof image.

Further, in the above description, there is explained an image processing apparatus that creates an additional image in which a color chip of a spot color is associated with a reproduction system, or a color name of a spot color is associated with a reproduction system. It is acceptable, however, that the image processing apparatus referred to in the present invention creates additional image describing reproduction system only.

Furthermore, in the above description, there is explained an image processing apparatus by way of example using a one-dimensional spot color print image data portion, which exist by the number of spot colors used in a printing. However, it is acceptable that an image processing apparatus of the present invention uses, for example, a spot color print image data portion wherein there exists by one an image data portion having the same number of dimensions as the number of spot colors.

Still further, in the above description, there is explained an image processing apparatus that creates a proof image to which an additional image is added. However, it is acceptable for the image processing apparatus of the present invention that the additional image is created independently of the proof image.

Still furthermore, in the above description, there is explained, by way of example, an image processing apparatus in which an additional image representative of either one of the reproduction property for a spot color and the reproduction system is added. However, it is acceptable for the image processing apparatus of the present invention that an additional image representative of both the reproduction property and the reproduction system.

As mentioned above, according to the present invention, it is possible to provide an image processing apparatus capable of easily discriminating a degree of the accuracy of the reproduction of the spot color reproduced on the proof image and how the spot color is reproduced on the proof image.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image processing apparatus wherein when an output device is used to output a proof image reproducing a printed image in which a process color print image constituting of process colors and a spot color print image are superposed upon each other, proof image data for the output device, that is representative of the proof image, is created through processing of printing image data representative of the printed image, the image processing apparatus comprising:
an image data obtaining section that obtains the printing image data;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing a reproduction property of a spot color in the reproduction system presupposed when the image data conversion section processes printing image data; and
an image data output section that outputs to the output device the proof image data converted in the image data conversion section and the additional image data created in the additional image data creating section, so that the output device outputs the proof image and the additional image.

2. An image processing apparatus according to claim 1, wherein the additional image data creating section creates additional image data representative of an additional image describing whether the spot color in the printed image is a color within a color reproduction area of the output device.

3. An image processing apparatus according to claim 1, wherein the additional image data creating section creates additional image data representative of an additional image describing with numerical values ranks where a degree of the reproduction property is divided into a plurality of ranks.

4. An image processing apparatus according to claim 1, wherein the additional image data creating section creates additional image data representative of an additional image associating a color chip of the spot color constituting the spot color print image with a description of reproduction property.

5. An image processing apparatus wherein when an output device is used to output a proof image reproducing a printed image in which a process color print image constituting of process colors and a spot color print image are superposed upon each other, proof image data for the output device, that is representative of the proof image, is created through processing of printing image data representative of the printed image, the image processing apparatus comprising:
an image data obtaining section that obtains the printing image data having a first image data portion representative of the process color print image and a second image data portion representative of the spot color print image;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing the reproduction system for a spot color in the output device presupposed when the image data conversion section processes the second image data portion; and
an image data output section that outputs to the output device the proof image data converted in the image data conversion section and the additional image data created in the additional image data creating section, so that the output device outputs the proof image and the additional image.

6. An image processing apparatus according to claim 1, wherein the additional image data creating section creates additional image data representative of an additional image describing a sort of ink used when the output device reproduces the spot color.

7. An image processing apparatus according to claim 1, wherein the additional image data creating section creates additional image data representative of an additional image associating a color chip of the spot color with a description of reproduction system for the spot color.

8. An image processing apparatus according to claim 1, wherein the output device reproduces the spot color by superposing inks of process colors using a specified halftone dot pattern, and
the additional image data creating section creates additional image data representative of an additional image describing a sort of the halftone dot pattern.

9. An image processing program storage medium storing an image processing program which causes a computer to operate as an image processing apparatus, when the image processing program is incorporated into the computer and is executed, the image processing apparatus comprising:
an image data obtaining section that obtains the printing image data;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing a reproduction property of a spot color in the reproduction system presupposed when the image data conversion section processes printing image data; and
an image data output section that outputs to the output device the proof image data converted in the image data conversion section and the additional image data created in the additional image data creating section, so that the output device outputs the proof image and the additional image.

10. An image processing program storage medium storing an image processing program which causes a computer to operate as an image processing apparatus, when the image processing program is incorporated into the computer and is executed, the image processing apparatus comprising:
an image data obtaining section that obtains the printing image data having a first image data portion representative of the process color print image and a second image data portion representative of the spot color print image;
an image data conversion section that converts the printing image data obtained in the image data obtaining section into the proof image data through processing of the printing image data presupposing a reproduction system for the printed image in the output device;
an additional image data creating section that creates additional image data for the output device, which is representative of an additional image describing the reproduction system for a spot color in the output device presupposed when the image data conversion section processes the second image data portion; and
an image data output section that outputs to the output device the proof image data converted in the image data conversion section and the additional image data created in the additional image data creating section, so that the output device outputs the proof image and the additional image.
